Europäisches Patentamt

European Patent Office

Office européen des brevets

(19)

(11) Veröffentlichungsnummer : **0 190 234
B1**

(12) EUROPÄISCHE PATENTSCHRIFT

(45) Veröffentlichungstag der Patentschrift :
22.02.89

(21) Anmeldenummer : 85903815.0

(22) Anmeldetag : 13.07.85

(86) Internationale Anmeldenummer :
PCT/EP 85/00346

(87) Internationale Veröffentlichungsnummer :
WO/8601331 (27.02.86 Gazette 86/05)

(51) Int. Cl.⁴ : **G 11 B 33/04**, G 11 B 23/023

(54) BEHÄLTER FÜR FLACHE AUFZEICHNUNGSTRÄGER.

(30) Priorität : 02.08.84 DE 8423026 U
18.12.84 DE 8436936 U

(43) Veröffentlichungstag der Anmeldung :
13.08.86 Patentblatt 86/33

(45) Bekanntmachung des Hinweises auf die Patenterteilung : 22.02.89 Patentblatt 89/08

(84) Benannte Vertragsstaaten :
DE FR GB IT

(56) Entgegenhaltungen :
EP--A-- 0 086 275
EP--A-- 0 092 666
EP--A-- 0 100 823
DE--A-- 2 427 104
DE--C-- 2 521 371

(73) Patentinhaber : **idn inventions and development of
novelties ag**
Hartbertstrasse 9
CH-7002 Chur (CH)

(72) Erfinder : **ACKERET, Peter
Allmendstrasse 18
CH-8700 Küsnacht (CH)**

(74) Vertreter : **Dipl.-Ing. H. Marsch Dipl.-Ing. K. Sparing
Dipl.-Phys.Dr. W.H. Röhl Patentanwälte
Rethelstrasse 123
D-4000 Düsseldorf 1 (DE)**

**Beschreibung**

Die Erfindung betrifft einen Behälter für flache Aufzeichnungsträger, wie Magnetbandkassetten, Schall- oder Bildplatten, mit den im Oberbegriff des Patentanspruchs 1 genannten Merkmalen. Ein solcher für die weitverbreiteten sogenannten Kompaktkassetten bestimmter Behälter ist in der DE-C-22 48 408 offenbart.

Bei dem bekannten Behälter weist der Schieber keine Seitenwände auf, so daß der Benutzer von oben im Spreizgriff die Kassette an zwei ihrer einander gegenüberliegenden Schmalseiten erfassen und entnehmen kann. Die Führung für den Schieber ist in einem Raum zwischen dem Schieberboden und dem darunterliegenden Gehäuseboden vorgesehen. Dies vergrößert die Bauhöhe und den Materialverbrauch, was bei einem Massenerzeugnis besonders störend ist.

Aufgabe der Erfindung ist es, den Behälter mit den im Oberbegriff genannten Merkmalen derart weiterzubilden, daß ein Behälter mit niedrigerer Bauhöhe gefertigt werden kann, indem die Führungen seitlich neben dem Aufbewahrungsgut vorgesehen werden, wobei jedoch die Entnahme des Aufzeichnungsträgers ohne besonderes Geschick möglich ist, also anders, als dies etwa in der DE-C-25 21 371 gelöst ist.

Eine bekannte Lösung dieser Aufgabe ist in EP-A-86 275 offenbart. Die Frontwand des Schiebers ist mit dem eigentlichen Schieberkörper gelenkig verbunden, wobei die Gelenkachse bezüglich der Frontwandebene weit in das Gehäuseinnere hinein versetzt ist. In der Öffnungsposition kann deshalb die Frontwand weit aufschwenken, so daß der Aufzeichnungsträger auch auf seinen Breitseiten erfaßt werden kann. Die Frontwand kann dabei doppelwandig ausgebildet sein, um ein Etikett einlegen zu können ; die Innenwand kann dabei einen Fingereingriffsausschnitt aufweisen, um das Auswechseln eines Etiketts zu erleichtern. Diese Bauart ist besonders für Videokassetten geeignet, denn diese benötigen keine Bandwickelsperrnocken, wie sie etwa aus der EP-A-92 666 bekannt sind ; bei gewöhnlichen Kompaktkassetten hingegen soll der Behälter so konzipiert sein, daß die Kassette bei der Entnahme auch von diesen Nocken freikommt.

Gemäß der Erfindung wird die oben genannte Aufgabe durch die in den Patentansprüchen 1 beziehungsweise 2 genannten Merkmale gelöst. Der Frontwandausschnitt ermöglicht, den Aufzeichnungsträger an einander gegenüberliegenden Stellen zu erfassen, wobei dafür gesorgt ist, daß die auf einem Schieberboden aufliegende Unterseite ebenfalls zugänglich ist — entweder, indem sich der Frontwandausschnitt in den Boden hinein fortsetzt, oder durch mechanisches Abheben des Aufzeichnungsträgers mittels Hebeorganen.

Damit der Aufzeichnungsträger trotz dieser Öffnung in der Frontwand geschützt ist, und auch aus ästhetischen Gründen, ist es bevorzugt, den Frontwandausschnitt mit einem Verschlußteil zu versehen, das zweckmäßigerweise mit den Mitteln zum Lösen der Schieberverriegelung kombiniert wird.

In den beigefügten Zeichnungen sind Ausführungsbeispiele für Kompaktkassetten- und Compactdiskbehälter dargestellt ; es ist aber darauf hinzuweisen, daß diese Behälterbauart auch z. B. für 8mm-Video-Kassetten, Bildplatten und so weiter geeignet ist. Bei den Kassettenbehältern ist die Anordnung so gewählt, daß die Kassette sich quer in den Schieber legt, doch ist die erfindungsgemäße Ausführung gleichermaßen brauchbar, wenn die Kassette längs im Schieber liegt.

Fig. 1 stellt zwei übereinander gestapelte Kompaktkassettenbehälter gemäß der Erfindung dar, von denen der untere geöffnet ist,

Fig. 1a ist ein Teilschnitt durch das Gelenk des Verschlußteils für den Ausschnitt,

Fig. 2 ist ein Schnitt nach Linie 2-2 der Fig. 1,

Fig. 3 zeigt einen analogen Behälter für Compactdisks,

Fig. 4 zeigt eine Alternative zu Fig. 1,

Fig. 5 zeigt perspektivisch, teilweise aufgebrochen, einen Behälter gemäß der Erfindung,

Fig. 6 ist eine schematisierte Schnittdarstellung durch den Behälter nach Fig. 5,

Fig. 7 zeigt perspektivisch den Frontbereich einer weiteren Ausführungsform, und

Fig. 8 stellt schematisch den Kippmechanismus der Schieber bei der Bauart gemäß Fig. 7 dar.

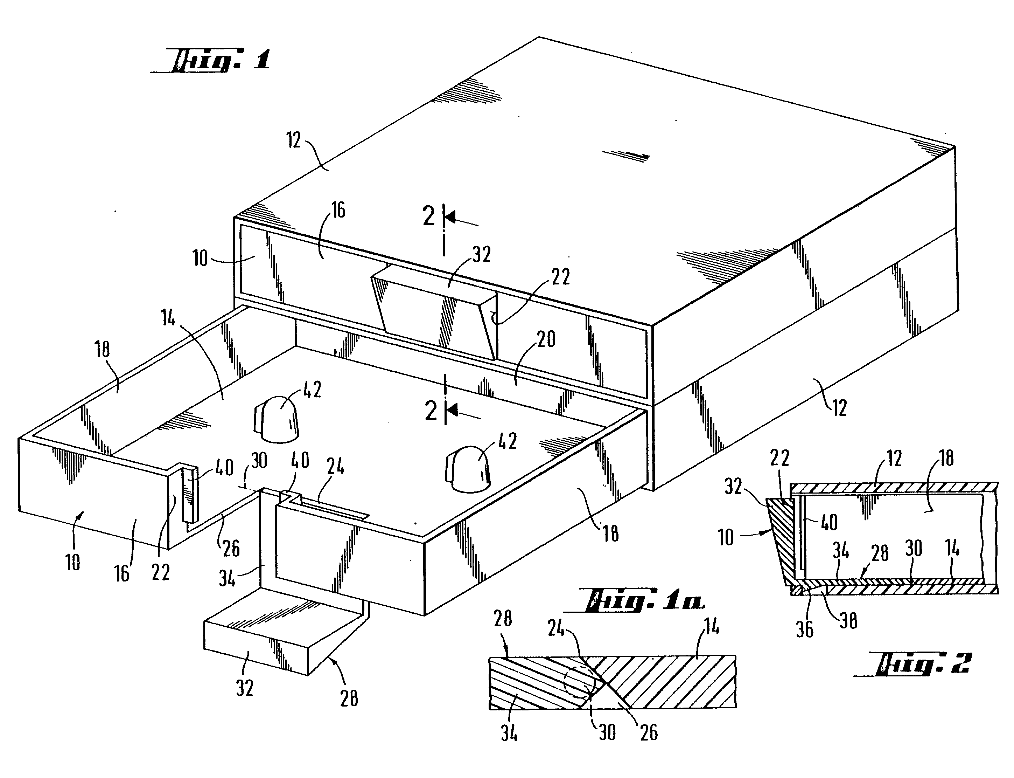

In der Ausführungsform nach Fig. 1 sind für jeden Schieber 10 eigene Gehäuse 12 vorgesehen, die mittels formschlüssig ineinandergreifender Elemente auf Deck- und Bodenwand des Gehäuses zu Blöcken stapelbar sind ; diese Elemente bilden keinen Teil der Erfindung und sind daher nicht zeichnerisch dargestellt.

Jeder Schieber 10 umfaßt eine Bodenwandung 14, von der eine Frontwand 16, Seitenwände 18 und eine Rückwand 20 senkrecht hochstehen. Zwischen der Gehäuserückwand und der Schieberrückwand wirkt eine Druckfeder, und vom Schieberboden ragen Anschlagnasen in Schlitze des Gehäusebodens ; auch diese Elemente sind nicht gezeichnet, doch kann man auf die Ausführungsformen der eingangs genannten DE-C-22 48 408 verweisen.

Die Frontwand 16 weist einen rechteckigen Ausschnitt 22 auf, der sich in die Bodenwandung 14 hinein verlängert. Die innere Querkante 24 dieses Bodenausschnitts 26 ist gerade, und unmittelbar vor ihr ist ein Verschlußteil 28 mittels Scharnier 30 angelenkt. Das Verschlußteil ist komplementär zu den Front- und Bodenausschnitten 22, 26 ausgebildet und demgemäß im Profil L-förmig.

Fig. 1a zeigt im vergrößerten Teilschnitt die bevorzugte Ausgestaltung des Scharnierbereichs : An das Verschlußteil sind Zapfen angeformt, die in komplementäre Lager des Schieberbodens eingeschnappt sind. Die Kante 24 ist schräg verlaufend ausgebildet, und die ihr zugekehrte Kante des Verschlußteils ist mit einem dachförmigen Querschnitt gestaltet. Demgemäß weist das Verschlußteil zwei Vorzugsstellungen auf, nämlich die in Fig. 1a dargestellte Verschlußposition und eine Öffnungsposition, in die das Verschlußteil durch die Federwirkung gelangt, die beim Auslenken des Verschlußteils entsteht ; die elastische Deformation der beteiligten Bauteile ergibt nämlich eine sogenannte Froschfederanordnung.

Der freie Schenkel des Verschlußteils 28 ist als Taste 32 ausgebildet, und der angelenkte Schenkel 34 trägt auf seiner Unterseite, die bei eingeschobenem Schieber dem Gehäuseboden zugekehrt ist, einen Haken 36, der in eine Falle 38 im Gehäuseboden eingreifen kann und dann den Schieber gegen die Vorspannung der Ausschubfederanordnung verriegelt. Zum Lösen der Verriegelung wird die Taste 32 angehoben. An die Begrenzungskanten des Frontwandabschnitts schließen sich einwärts abgewinkelte Fortsätze 40 an, die den Spalt zwischen der Taste 32 und der Frontwand überdecken und verhindern, daß das Verschlußteil bei entnommener Kassette versehentlich einwärts verschwenkt wird, wobei das Scharnier 30 beschädigt werden könnte.

Nach Ausschub des Schiebers klappt man das Verschlußteil 28 in die für den unteren Schieber in Fig. 1 dargestellte Position, so daß eine eingelegte Kassette oben und unten erfaßt und über die Frontwand gehoben herausziehbar ist. Dabei kommt sie auch mit ihren Bandwickelnaben von den an den Schieberboden angeformten Blockiernocken 42 frei.

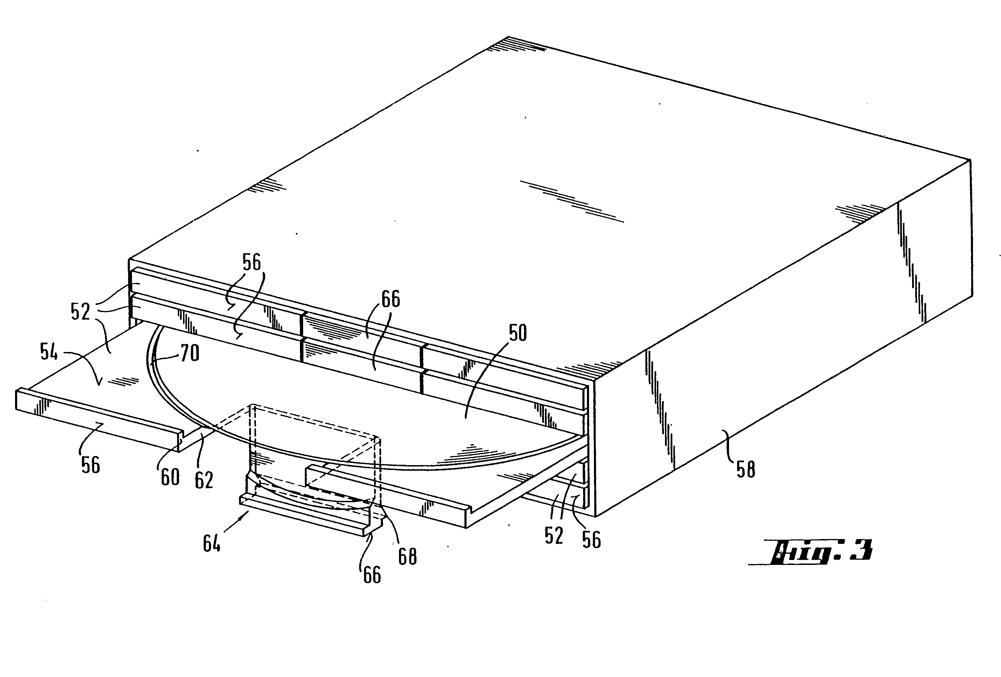

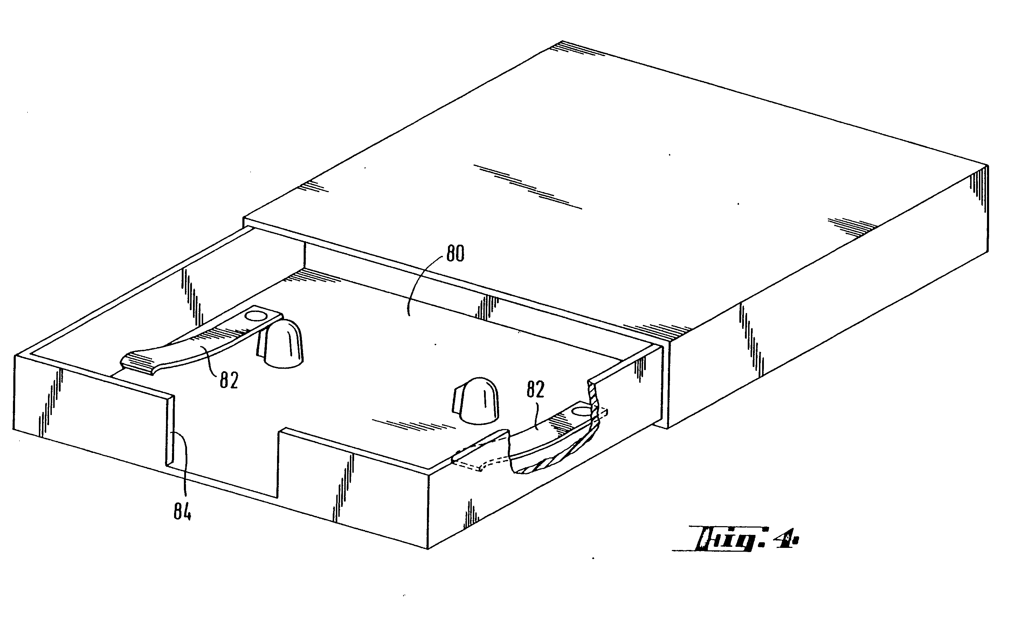

Fig. 3 zeigt eine Ausführungsform für die Aufbewahrung von Compactdisks, die im Prinzip ebenso aufgebaut ist wie die für Kompaktkassetten.

Für jede Disk 50 ist ein eigener Schieber 52 vorgesehen, der im wesentlichen eine Bodenwandung 54 und eine Frontwand 56 aufweist, die einstückig mit der Bodenwandung gespritzt ist. Im Ausführungsbeispiel ist fünf Schieber ein gemeinsames Gehäuse 58 zugeordnet. Frontwandabschnitt 60, Bodenausschnitt 62 und Verschlußteil 64 mit Taste 66 und Verriegelungshaken 68 entsprechen dem ersten Ausführungsbeispiel, abgesehen von den kleineren Vertikalabmessungen.

Die Schieber 52 weisen hier keine senkrecht nach hinten an die Frontwand anschließenden Seitenwandungen auf. Dafür ist in den Schieberboden eine an den Durchmesser der Disk 50 angepaßte Eintiefung 70 vorgesehen, deren umschlossene Innenfläche — was in der Zeichnung nicht erkennbar ist — konkav eingetieft ist ; damit wird erreicht, daß die Disk immer nur mit ihrer Außenkante in Kontakt mit dem Schieber kommen kann, auch beim Einlegen oder Entnehmen.

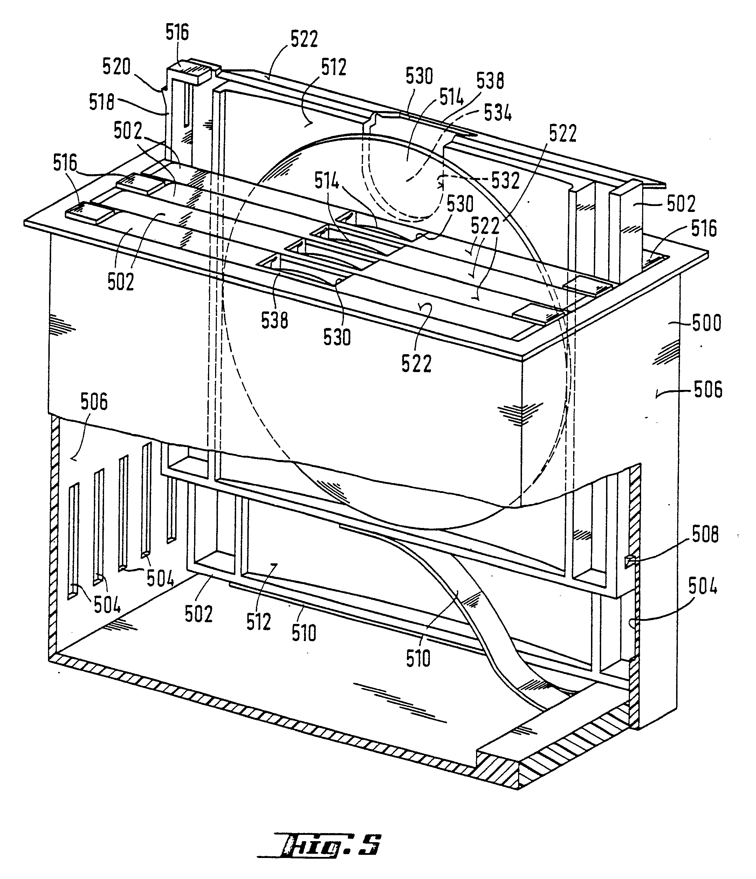

In der Variante des Kompaktkassettenbehälters nach Fig. 4 fehlt der Bodenausschnitt. Der Frontwandausschnitt erstreckt sich nur bis zur Oberseite des Schieberbodens 80. Damit trotzdem die Kassette bequem erfaßt werden kann, ist ein Hebeorgan in Form zweier Blattfedern 82 vorgesehen, die derart bemessen sind, daß sie in der

Entnahmeposition des Schiebers gemäß Fig. 4 eine eingelegte Kassette zumindest so weit heben können, daß man durch den Frontwandausschnitt 84 hindurch auch die dem Boden 80 zugekehrte Seite der Kassette erfassen kann. Andererseits müssen die Federn 82 weich genug sein, um das Einschieben des Schiebers mit aufgelegter Kassette nicht zu behindern. — Die Ausschubferanordnung, Führungen, Anschläge und Verriegelungsanordnung sind hier nicht dargestellt. In dieser Ausführungsform ist beispielsweise eine Verriegelungsanordnung zweckmäßig, wie sie in der EP-A-83108472.8 offenbart ist.

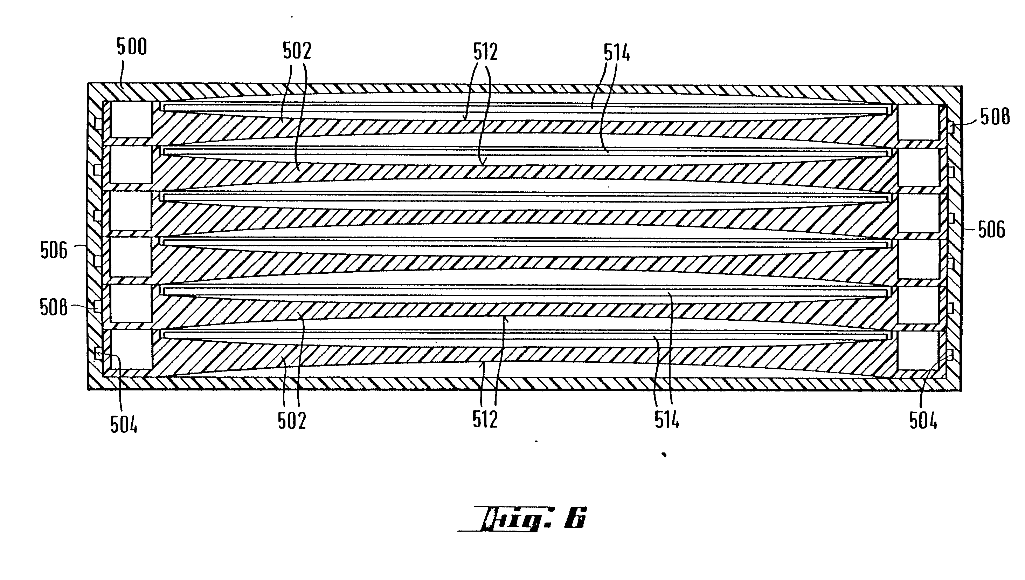

Die Fig. 5-8 zeigen erfindungsgemäße Behälter für Schall- oder Bildplatten, insbesondere für sogenannte Compactdisks.

Abspielgeräte für Compactdisks sind oft so ausgebildet, daß man die Disk — die gegen Fingerschweiß relativ unempfindlich ist — auf ihren Hauptflächen zangenartig erfaßt und in einen Einführungsschlitz des Abspielgerätes schiebt. Es ist daher für die einfache Handhabung, die besonders wichtig ist bei Verwendung des Behälters in einem Kraftfahrzeug zur Bedienung durch den Fahrer, wünschenswert, daß die Disk bei Entnahme und bei Einlegen aus dem bzw. in den Behälter in gleicher Weise erfaßt werden kann und soll.

In Fig. 5 erkennt man ein im wesentlichen quaderförmiges Gehäuse 500 mit einer offenen Frontseite, in dem gleitbeweglich sechs parallel zueinander angeordnete Schieber in Form von Haltern 502 geführt sind. Die Führung erfolgt in Nuten 504 in den Gehäuseseitenwandungen 506, in welche Führungsnocken 508 der Halter greifen. Ein zweiter Satz von Nuten und Nocken ist oberhalb der im Ausschnitt erkennbaren vorgesehen, so daß die Halter sicher geführt sind ; die frontseitigen Enden der Nuten definieren die äußere Endlage der Halter. Im Bodenbereich des Gehäuses sind in diesem Blattfedern 510 einseitig eingespannt montiert, die auf die der Front abgekehrte rückseitige Kante der Halter einwirken. Alle sechs Blattfedern könnten auch aus einem gemeinsamen kammartigen Stanz- und Biegeteil bestehen.

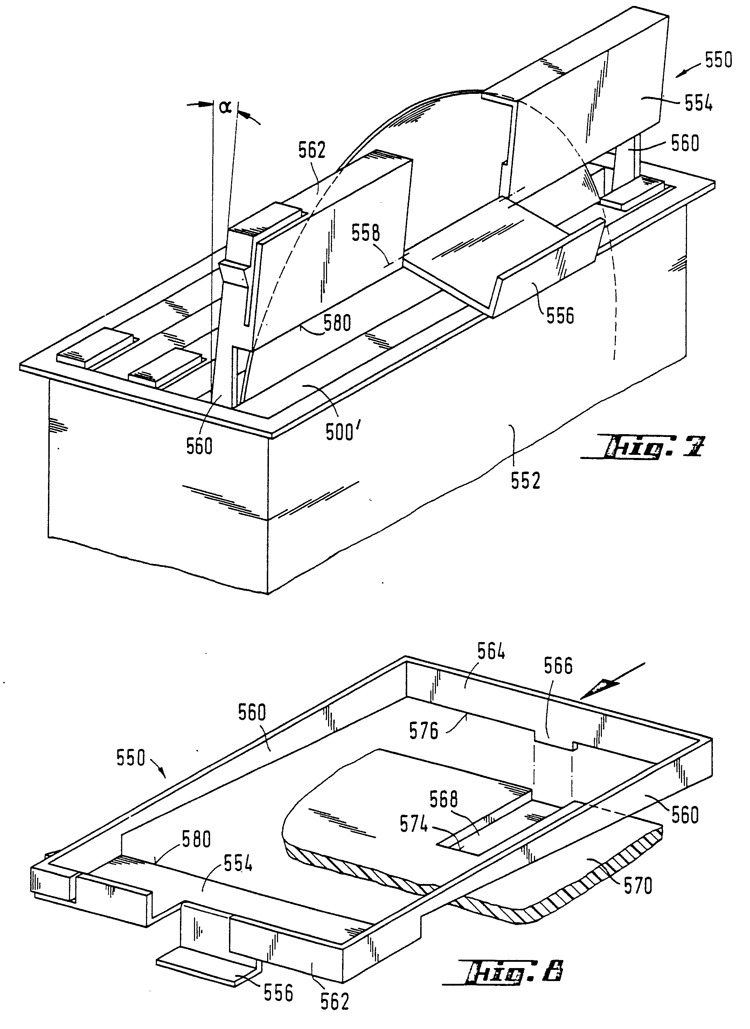

Die Halter umfassen ein plattenförmiges Hauptteil 512, dessen Querschnittskontur in Fig. 6 dargestellt ist. Demgemäß ist jeder Halter auf der Seite, wo eine Disk 514 auf ihm ruht, wannenartig eingetieft mit dem Ergebnis, daß bei einer Relativbewegung der Disk bezüglich des betreffenden Halters die diesem zugekehrte Seite der Disk nur in ihrem Rand- oder Kantenbereich in Kontakt mit dem Halter kommen kann, so daß sie keinesfalls zerkratzt werden kann. Vorzugsweise ist auch die der Disk abgewandte Seite des Halters in gleicher Weise eingetieft, damit auch die andere Seite der Disk nicht zerkratzen kann, und entsprechend ist die Deckwand des Gehäuses gestaltet, wie in Fig. 6 erkennbar. Entsprechendes gilt auch für das Ausführungsbeispiel nach Fig. 7 und 8, obwohl dort der Einfachheit halber diese Eintiefungen nicht nochmals gezeichnet sind ; es sei nur angemerkt, daß in dieserletztgenannten Ausführungsform zwischen den einzelnen rahmenförmig ausgebildeten Haltern im Gehäuse Zwischenböden vorgesehen sind, die dann die wannenförmigen Eintiefungen aufweisen.

Jeder Halter weist eine angeformte Taste 516 auf, die an einer angeschnittenen Blattfeder 518 sitzen, was es erlaubt, die Taste in der Halterebene relativ zu diesem auszulenken und dabei einen Verriegelungshaken 520 aus einer im Gehäuse vorgesehenen Falle auszurasten ; diese Art der Verriegelung ist im Prinzip aus der eingangs genannten Druckschrift bekannt.

An den Halter ist eine Frontwand 522 mittels eines angespritzten sogenannten « Filmgelenks » angelenkt und in die in Fig. 1 dargestellte Position mittels einer Feder, vorzugsweise mittels einer im Bereich des Filmgelenks eingebauten Blattfeder (nicht gezeigt) vorgespannt. Bei eingeschobenem Halter rastet die Frontwand mit kleinen Nokken (nicht gezeigt) reibungsschlüssig in entsprechenden Einsenkungen des jeweils darüber befindlichen Halters bzw. — für den obersten Halter — des Gehäuses ein ; diese Rastkraft wird von der Blattfeder 510 bei Entriegeln der jeweiligen Taste überwunden, so daß bei ausfahrendem Halter die Frontwand wegschwenkt.

Jede Frontwand hat einen Ausschnitt 530, der im plattenförmigen Hauptteil 512 ein Bodenausschnitt 532 zugeordnet ist. Man erkennt, daß bei ausgefahrenem Halter ein Teilbereich 534 der Disk beidseits mit den Fingern zangenartig erfaßt werden und in Fluchtlinie herausziehbar ist. Ebenso unproblematisch ist das Einlegen, wobei der Hauptteilabschnitt, der aus dem Gehäuse ausgefahren ist, eine Leitfläche bildet ; der Benutzer muß also nicht auf den Schlitz zwischen zwei Haltern zielen, so daß der Behälter gewissermaßen « blind » beschickt werden kann. Ein Steg 538 verbindet die beiden Teile der Frontwand beidseits des Ausschnitts, doch ist dieser Steg auf der dem Hauptteil 512 abgewandten Kante der Frontwand vorgesehen, so daß der Ausschnitt nicht verdeckt wird.

In der Ausführungsform nach Fig. 7, 8 kippt der gesamte Halter um eine Achse nahe seinem gehäuseinneren Ende, wie noch unter Bezugnahme auf Fig. 8 im einzelnen zu erläutern. In Fig. 7 erkennt man den einen, ausgeschobenen Halter 550 und das Gehäuse 552 ; es ist anzumerken, daß der Halter in Fig. 7 zu weit ausgeschoben gezeichnet ist, um seinen Aufbau zu verdeutlichen ; in der Realität fährt er nur so weit aus dem Gehäuse aus, daß er gerade die erwähnte Kippbewegung (Winkel α) ausführen kann, wenn seine Bodenfläche 554 die Gehäusefront passiert hat. Etwa mittig in der Frontwand ist ein im Querschnitt L-förmiger Abdeckwinkel 556 bei 558 an den Halter angelenkt ; er ist in die in Fig. 7 gezeichnete abgeklappte Position federvorgespannt und legt sich bei Einschub des Halters in das Gehäuse automatisch in die Abdeckposition um, indem er auf die unter ihm befindliche, mit der Gehäusefront bündige Oberkante des nächstniedrigeren Halters oder — im Falle des untersten Halters 500' - auf den Gehäuseboden aufläuft.

Die Federanordnung zum Vorspannen der Halter in die Ausschubposition und die Auslösetaste mit manuell ausrastbarem Riegel entsprechen der Ausführung nach Fig. 5 und 6.

Wie in Fig. 8 erkennbar, die weitgehend schematisiert ist, umfaßt jeder Halter einen längs der Gehäuseseitenwände geführten Rahmen, dessen seitliche parallel zur Ausschubrichtung verlaufende Wangen 560 etwa dreieckige Ausschnitte aufweisen. Die der Frontwand 562 gegenüberliegende gehäuseinnere Halterrückwand 564 ist mit einem Fortsatz 566 versehen, der in einer Nut 568 verläuft ; diese Nut befindet sich in Zwischenböden 570 des Gehäuses bzw. — für den untersten Halter — im Gehäuseboden. Wenn der Fortsatz bei der Ausschubbewegung des Halters auf die Endkante 574 der Nut trifft, ist der Halter gerade soweit aus dem Gehäuse ausgefahren, daß seine Bodenfläche 554 die Gehäusefront passiert hat, und da die Ausschubfeder oberhalb des Fortsatzes auf den Halter einwirkt, ergibt sich ein Drehmoment um die Unterkante 576, die zum Kippen des Halters führt. Um den Halter wieder einzuschieben, wird er von Hand zurückgekippt und eingeschoben, wonach die Verriegelung selbsttätig einrastet.

Die Zwischenböden 570 erstrecken sich in Richtung Gehäusefront bis zu der Linie, wo sich bei eingeschobenem Halter die Endkante 580 der Bodenplatte 554 befindet, so daß die Disk dann teilweise auf dem Zwischenboden, teilweise auf dieser Bodenplatte ruhen kann. Wie oben erwähnt, sind diese Teile vorzugsweise wannenartig eingetieft, doch ist dies in den Fig. 7 und 8 nicht gezeichnet.

In einer Variante kann vorgesehen sein, daß von den Zwischenböden sich Stege bis zur Frontwand des jeweiligen Halters erstrecken, die in entsprechende Ausschnitte der Bodenplatte 554 greifen, damit das Einlegen der Disk problemlos erfolgen kann.

## Patentansprüche

1. Behälter für flache Aufzeichnungsträger (50, 514), wie Magnetbandkassetten, Schall- oder Bildplatten, mit einem eine frontseitige Öffnung aufweisenden Gehäuse (12, 58, 500, 552), in dem gleitbeweglich ein Schieber (10, 52, 502, 550, 500') zur Aufnahme des Aufzeichnungsträgers mit seinen Breitseiten im wesentlichen parallel zur Ausschubrichtung angeordnet ist, welcher eine mit der Gehäuseöffnung bei eingeschobenem Schieber im wesentlichen bündige Frontwand (16, 56, 522, 562) aufweist, mit einer Federanordnung (510), die den Schieber in eine durch An- schläge (574) definierte Öffnungsposition vor- spannt, mit einer Verriegelungsanordnung (36, 38, 68, 520), die den Schieber in seiner in das Gehäuse eingeschobenen Schließposition gegen die Federvorspannung hält, und mit einer Abstützfläche (14, 54, 512, 554) für jeweils einen Aufzeichnungsträger sowie mit zwischen Gehäuse und Schieber wirkenden Führungsmitteln (504 + 508) für die Schiebergleitbewegung, dadurch gekennzeichnet, daß die Frontwand einen Ausschnitt (22, 60, 530) aufweist und die Abstützfläche in Verlängerung des Ausschnitts einen Freiraum (26, 62, 532) begrenzt, der es in der Öffnungsposition ermöglicht, den Aufzeichnungsträger auf seinen Breitseiten im Bereich des Frontwandausschnitts für die Entnahme zangenartig zu erfassen.

2. Behälter für flache Aufzeichnungsträger, wie Magnetbandkassetten, Schall- oder Bildplatten, mit einem eine frontseitige Öffnung aufweisenden Gehäuse, in dem gleitbeweglich ein Schieber zur Aufnahme des Aufzeichnungsträgers mit seinen Breitseiten im wesentlichen parallel zur Ausschubrichtung angeordnet ist, welcher eine mit der Gehäuseöffnung bei eingeschobenem Schieber im wesentlichen bündige Frontwand aufweist, mit einer Federanordnung, die den Schieber in eine durch Anschläge definierte Öffnungsposition vorspannt, mit einer Verriegelungsanordnung, die den Schieber in seiner in das Gehäuse eingeschobenen Schließposition gegen die Federvorspannung hält, und mit einer Abstützfläche für jeweils einen Aufzeichnungsträger sowie mit zwischen Gehäuse und Schieber wirkenden Führungsmitteln für die Schiebergleitbewegung, dadurch gekennzeichnet, daß die Frontwand einen in der freien Kante der Frontwand mündenden Ausschnitt (84) aufweist und daß zum Abheben des Aufzeichnungsträgers von der Abstützfläche (80) im Bereich des Frontwandausschnitts Hebeorgane (82) vorgesehen sind, die es in der Öffnungsposition ermöglichen, den Aufzeichnungsträger auf seinen Breitseiten im Bereich des Frontwandausschnitts für die Entnahme zangenartig zu erfassen.

3. Behälter nach Anspruch 2, dadurch gekennzeichnet, daß die Organe eine Hebefeder (82) umfassen.

4. Behälter nach Anspruch 1, gekennzeichnet durch ein Verschlußteil (28, 64, 556) für den Frontwandausschnitt (22, 60, 530).

5. Behälter nach Anspruch 4, dadurch gekennzeichnet, daß das Verschlußteil (28, 64, 556) durch Entriegeln des Schiebers (10, 52, 502, 550) aus dem Frontwandausschnitt (22, 60, 530) entfernbar ist.

6. Behälter nach Anspruch 5, dadurch gekennzeichnet, daß das Verschlußteil (28) als Entriegelungstaste (32) für den Schieber (10) ausgebildet ist.

7. Behälter nach Anspruch 4, gekennzeichnet durch ein gemeinsames Verschlußteil (28, 64, 556) für den Frontwandausschnitt und den Schieberbodenausschnitt (26, 62).

8. Behälter nach Anspruch 7, dadurch gekennzeichnet, daß der Schieberbodenausschnitt (26, 62) an seinem dem Gehäuse (12, 58) zugewandten Ende ein Gelenk (30) aufweist, an dem das im Profil L-förmige Verschlußteil (28, 64) mit seinem einen freien Schenkelende (34) angelenkt ist.

9. Behälter nach Anspruch 6 und 8, dadurch gekennzeichnet, daß an den an den Schieber angelenkten Schenkel ein Haken (36, 68) angeformt ist, der zum Verriegeln des Schiebers in einen Gehäusebodenausschnitt (38) greift und aus diesem durch Anheben des anderen Schenkels auslösbar ist.

10. Behälter nach Anspruch 1 oder 2, bei dem an den Schieberboden (14, 80) Sperrnocken (42) zum Eingriff in Bandwickelkernnaben von Magnetbandkassetten angeformt sind, dadurch gekennzeichnet, daß die Sperrnocken so bemessen sind, daß die Kassette beim Entnehmen über die Frontwand (16) auch von den Nocken freikommt.

11. Behälter nach Anspruch 4, dadurch gekennzeichnet, daß das Verschlußteil (28) von einer Federanordnung in eine den Frontwandausschnitt (22) freigebende Position vorgespannt ist.

12. Behälter nach Anspruch 11, dadurch gekennzeichnet, daß die Federanordnung beim Auslösen des Schiebers automatisch freigegeben wird.

13. Behälter nach Anspruch 12, dadurch gekennzeichnet, daß das Verschlußteil (28) beim Einschub des Schiebers (10) in das Gehäuse gegen die Vorspannung der Federanordnung in ihre Verschließposition rückführbar ist.

14. Behälter nach Anspruch 1, dadurch gekennzeichnet, daß die Frontwand (522, 562) schwenkbeweglich geführt ist, derart, daß in der Öffnungsposition der Aufzeichnungsträger in Fluchtlinie herausziehbar ist.

15. Behälter nach Anspruch 14, dadurch gekennzeichnet, daß an den Schieber (502) eine schwenkbare Frontwandbaugruppe (522) angelenkt ist.

16. Behälter nach Anspruch 14, dadurch gekennzeichnet, daß der gesamte Schieber (550) zusätzlich zu seiner Schieberbewegung noch zu einer Schwenkbewegung antreibbar ist um eine Achse, die im wesentlichen senkrecht zu seiner Schieberichtung liegt.

17. Behälter nach Anspruch 16, dadurch gekennzeichnet, daß Frontwandteile beidseits des Ausschnitts über einen Schieberbodenabschnitt (554), der im wesentlichen senkrecht zur Frontwand (562) liegt, verbunden sind.

18. Behälter nach Anspruch 14, dadurch gekennzeichnet, daß der Schieber eine wannenartig eingetiefte Bodenplatte (512) zur Aufnahme einer Schall- oder Bildplatte (514) umfaßt.

19. Behälter nach Anspruch 18, dadurch gekennzeichnet, daß die Bodenplatte (512) auf beiden Seiten wannenartig eingetieft ist.

20. Behälter nach Anspruch 1, bei dem die Verriegelungsanordnung manuell mittels einer Taste (516) auslösbar ist, dadurch gekennzeichnet, daß der Behälter ein Gehäuse (500) für eine Mehrzahl übereinander angeordneter Schieber (502) umfaßt, und daß die Tasten benachbarter Schieber zueinander versetzt im Bereich der jeweiligen Frontwand (522) angeordnet sind.

21. Behälter nach Anspruch 1 mit einem Gehäuse zur Aufnahme einer Mehrzahl von Schiebern, gekennzeichnet durch an das Gehäuse angeformte Zwischenböden zum Begrenzen der einzelnen Schieberaufnahmefächer.

22. Behälter nach Anspruch 15, dadurch gekennzeichnet, daß die Frontwand über ein Filmgelenk mit dem Schieber verbunden ist.

23. Behälter nach Anspruch 15, dadurch gekennzeichnet, daß die Frontwand in ihre weggeschwenkte Position federvorgespannt ist.

24. Behälter nach Anspruch 22 und 23, dadurch gekennzeichnet, daß die Vorspannfeder für die Frontwand eine im Bereich des Gelenks angeordnete Blattfeder ist.

25. Behälter nach Anspruch 16, dadurch gekennzeichnet, daß der Schieber (550) in seine Kipposition federvorgespannt ist.

26. Behälter nach Anspruch 1, dadurch gekennzeichnet, daß die den Schieber in die Öffnungsposition vorspannende Federanordnung eine Blattfeder (510) umfaßt.

27. Behälter nach Anspruch 26, dadurch gekennzeichnet, daß die Blattfeder (510) einseitig am Gehäuse festgelegt ist und mit ihrem freien Ende auf den Schieber einwirkend angeordnet ist.

28. Behälter nach Anspruch 21, dadurch gekennzeichnet, daß die Zwischenböden wannenartig eingetieft sind.

**Claims**

1. A container for flat recording media (50, 514), such as magnetic tape cassettes, records or video discs, with a housing (12, 58, 500, 552) having a front opening and in which housing a slider member (10, 52, 502, 550, 500') to receive the recording medium with its broad faces substantially parallel to the ejection direction is arranged so that it can slide and has a front wall (16, 56, 522, 562) substantially flush with the housing opening when the slider member is pushed in, with a spring arrangement (510) which biases the slider member into an open position defined by stops (574), with a locking arrangement (36, 38, 68, 520) which holds the slider member against the spring bias in the closed position in which it is pushed into the housing, and with a support surface (14, 54, 512, 554) for one recording medium in each case, and also with guide means (504 + 508) acting between the housing and the slider member for the sliding movement of the slider member, characterised in that the front wall has a cut-out (22, 60, 530) and the support surface, in extension of the cut-out, defines a free space (26, 62, 532) which in the open position makes it possible to grasp the recording medium in a pincer-like manner on its broad faces in the region of the cut-out in the front wall for removal.

2. A container for flat recording media, such as magnetic tape cassettes, records or video discs, with a housing having a front opening and in which housing a slider member to receive the recording medium with its broad faces substantially parallel to the ejection direction is arranged so that it can slide and has a front wall substantially flush with the housing opening when the slider member is pushed in, with a spring arrangement which biases the slider member into an open position defined by stops, with a locking arrangement which holds the slider member against the spring bias in the closed position in which it is pushed into the housing, and with a support surface for one recording medium in each case, and also with guide means acting between the housing and the slider member for the sliding movement of the slider member, characterised in that the front wall has a cut-out (84) opening into the free edge of the front wall and that in order to lift the recording medium away from the support surface (80) in the region of the cut-out in the front wall, lifting devices (82) are provided which make it possible, in the open position, to grasp the recording medium in a pincer-like manner on its broad faces in the region of the cut-out in the front wall for removal.

3. A container according to Claim 2, characterised in that the devices comprise a lifting spring (82).

4. A container according to Claim 1, characterised by a closure member (28, 64, 556) for the front wall cut-out (22, 60, 530).

5. A container according to Claim 4, characterised in that the closure member (28, 64, 556) can be moved away out of the front wall cut-out (22, 60, 530) by unlocking the slider member (10, 52, 502, 550).

6. A container according to Claim 5, characterised in that the closure member (28) is in the form of an unlocking button (32) for the slider member (10).

7. A container according to Claim 4, characterised by a common closure member (28, 64, 556) for the front wall cut-out and the cut-out (26, 62) in the floor of the slider member.

8. A container according to Claim 7, characterised in that the cut-out (26, 62) in the floor of the slider member has at the end facing towards the housing (12, 58) a joint (30) onto which the closure member (28, 64), which is L-shaped in profile, is hinged by the end of one free limb (34).

9. A container according to Claim 6 and 8, characterised in that on the limb hinged to the slider member a hook (36, 68) is formed which in order to lock the slider member engages in a cut-out (38) in the housing floor and can be released therefrom by lifting the other limb.

10. A container according to Claim 1 or 2, in which blocking projections (42) are formed on the slider member floor (14, 80) to engage in tape winding hubs of magnetic tape cassettes, characterised in that the blocking projections are of such dimensions that the cassette also comes free of the projections when removed over the front wall (16).

11. A container according to Claim 4, characterised in that the closure member (28) is biased by a spring arrangement into a position liberating the front wall cut-out (22).

12. A container according to Claim 11, characterised in that the spring arrangement is automatically liberated on the release of the slider member.

13. A container according to Claim 12, characterised in that the closure member (28) is capable of being returned to its closed position, when the slider member is pushed into the housing, against the bias of the spring arrangement.

14. A container according to Claim 1, characterised in that the front wall (522, 562) is guided so that it is pivotably movable in such a way that in the open position the recording medium can be pulled out in alignment.

15. A container according to Claim 14, characterised in that a pivotable front wall assembly (522) is hinged onto the slider member (502).

16. A container according to Claim 14, characterised in that the entire slider member (550), in addition to its slider movement, is also capable of being impelled to execute a pivoting movement about an axis which is substantially perpendicular to its sliding direction.

17. A container according to Claim 16, characterised in that parts of the front wall on either side of the cut-out are connected by way of a section (554) of the slider member floor which is substantially perpendicular to the front wall (562).

18. A container according to Claim 14, characterised in that the slider member comprises a floor plate (512), provided with a dish-like depression, to receive a record or video disc (514).

19. A container according to Claim 18, characterised in that the floor plate (512) has a dish-like depression on both sides.

20. A container according to Claim 1, in which the locking arrangement can be released manually by means of a button (516), characterised in that the container comprises a housing (500) for a plurality of slider members (502) arranged one above the other, and that the buttons of adjacent slider members are arranged in the region of the respective front wall (522) so that they are staggered in relation to one another.

21. A container according to Claim 1 with a housing to receive a plurality of slider members, characterised by intermediate floors formed on the housing to define the individual compartments to receive the slider members.

22. A container according to Claim 15, characterised in that the front wall is connected to the slider member by way of an integral hinge.

23. A container according to Claim 15, characterised in that the front wall is spring-biased into the position in which it is pivoted away.

24. A container according to Claims 22 and 23, characterised in that the bias spring for the front wall is a leaf spring arranged in the region of the hinge.

25. A container according to Claim 16, characterised in that the slider member (550) is spring-biased into its tilted position.

26. A container according to Claim 1, characterised in that the spring arrangement biasing the slider member into the open position comprises a leaf spring (510).

27. A container according to Claim 26, characterised in that the leaf spring (510) is fixed to the housing at one end and is arranged to act with its free end on the slider member.

28. A container according to Claim 21, characterised in that the intermediate floors have dish-like depressions.

**Revendications**

1. Récipient pour des supports d'enregistrement plats (50, 514), comme par exemple des cassettes à bande magnétique, des disques ou des disques vidéo, comportant un boîtier (12, 58, 500, 552) possédant une ouverture au niveau de sa face avant et dans lequel est disposé, de manière à pouvoir se déplacer avec glissement, un tiroir (10, 52, 502, 550, 500'), qui sert à recevoir le support d'enregistrement et dont les côtés larges s'étendent sensiblement parallèlement à la direction d'extraction et qui possède une paroi avant (16, 56, 522, 562) se terminant sensiblement de niveau avec l'ouverture du boîtier lorsque le tiroir est inséré, et un dispositif à ressort (510), qui précontraint le tiroir dans une position d'ouverture définie par des butées (574), un dispositif de verrouillage (36, 38, 68, 520), qui maintient le tiroir dans sa position insérée dans le boîtier à l'encontre de la précontrainte exercée par le ressort, et une surface d'appui (14, 54, 512, 554) pour un support respectif d'enregistrement, ainsi que des moyens de guidage (504 + 508) agissant entre le boîtier et le tiroir pour le mouvement de glissement du tiroir, caractérisé en ce que la paroi avant possède une découpe (22, 60, 530) et que la surface d'appui limite, dans le prolongement de la découpe un espace libre (26, 62, 532) qui permet, dans la position d'ouverture, de saisir, à la manière d'une pince, en vue de son prélèvement, le support d'enregistrement sur ses deux côtés larges au niveau de la découpe de la paroi avant.

2. Récipient pour des supports d'enregistrement plats, comme par exemple des cassettes à bande magnétique, des disques ou des disques vidéo, comportant un boîtier possédant une ouverture au niveau de sa face avant et dans lequel est disposé, de manière à pouvoir se déplacer avec glissement, un tiroir, qui sert à recevoir le support d'enregistrement et dont les côtés larges s'étendent sensiblement parallèlement à la direction d'extraction et qui possède une paroi avant se terminant sensiblement de niveau avec l'ouverture du boîtier lorsque le tiroir est inséré, et un dispositif à ressort, qui précontraint le tiroir dans une position d'ouverture définie par des butées, un dispositif de verrouillage, qui maintient le tiroir dans sa position insérée dans le boîtier à l'encontre de la précontrainte exercée par le ressort, et une surface d'appui pour un support respectif d'enregistrement, ainsi que des moyens de guidage agissant entre le boîtier et le tiroir pour le mouvement de glissement du tiroir, caractérisé en ce que la paroi avant possède une découpe (84) débouchant au niveau de l'arête libre de la paroi avant et en ce que pour écarter le support d'enregistrement de la surface d'appui (80) il est prévu, au voisinage de la découpe de la paroi avant, des organes de soulèvement (82) qui permettent, dans la position d'ouverture, de saisir à la manière d'une pince, en vue de son prélèvement, le support d'enregistrement sur ses côtés larges au niveau de la découpe de la paroi avant.

3. Récipient selon la revendication 2, caractérisé en ce que les organes comprennent un ressort de soulèvement (82).

4. Récipient selon la revendication 1, caractérisé par un élément de fermeture (28, 64, 556) pour la découpe (22, 60, 530) de la paroi avant.

5. Récipient selon la revendication 4, caractérisé en ce que l'élément de fermeture (28, 64, 556) peut être retiré de la découpe (22, 60, 530) de la paroi avant, par déverrouillage du tiroir (10, 52, 502, 550).

6. Récipient selon la revendication 5, caractérisé en ce que l'élément de fermeture (28) est réalisé sous la forme d'une touche de déverrouillage (32) pour le tiroir (10).

7. Récipient selon la revendication 4, caractérisé par un élément de fermeture commun (28, 64, 556) pour la découpe de la paroi avant et la découpe (26, 62) du fond du tiroir.

8. Récipient selon la revendication 7, caractérisé en ce que la découpe (26, 62) du fond du tiroir comporte, au niveau de son extrémité tournée vers le logement (12, 58), une articulation (30), au niveau de laquelle l'élément de fermeture (28, 64), qui possède un profil en forme de L est raccordé par l'extrémité libre (34) de sa branche.

9. Récipient selon les revendications 6 et 8, caractérisé en ce que sur la branche articulée sur le tiroir se trouve formé par façonnage un crochet (36, 68) qui s'engage dans une découpe (38) du fond du boîtier pour verrouiller le tiroir et peut être dégagé de cette découpe par soulèvement de l'autre branche.

10. Récipient selon la revendication 1 ou 2, dans lequel des tétons de blocage (42) destinés à s'engager dans des moyeux d'enroulement de la bande de cassettes à bande magnétique sont formés par façonnage sur le fond (14, 80) du tiroir, caractérisé en ce que les tétons de blocage sont dimensionnés de manière que lors du prélèvement de la cassette par dessus la paroi avant (16), la cassette est également dégagée des tétons.

11. Récipient selon la revendication 4, caractérisé en ce que l'élément de fermeture (28) est précontraint par un dispositif à ressort dans une position libérant la découpe (22) de la paroi avant.

12. Récipient selon la revendication 11, caractérisé en ce que le dispositif à ressort est automatiquement libéré lors du dégagement du tiroir.

13. Récipient selon la revendication 12, caractérisé en ce que lors de l'insertion du tiroir (10) dans le boîtier, l'élément de fermeture (28) peut être rétracté dans sa position de fermeture à l'encontre de la contrainte du dispositif à ressort.

14. Récipient selon la revendication 1, caractérisé en ce que la paroi avant (522, 562) est guidée de manière à pouvoir pivoter de telle sorte que, dans la position d'ouverture, le support d'enregistrement peut être ressorti en étant aligné avec la paroi avant.

15. Récipient selon la revendication 14, caractérisé en ce qu'un module pivotant (522) de la paroi avant est articulé sur le tiroir (502).

16. Récipient selon la revendication 14, caractérisé en ce que l'ensemble du tiroir (550) peut, en dehors de son déplacement de translation, être également entraîné selon un mouvement de pivotement autour d'un axe sensiblement perpendiculaire à sa direction de translation.

17. Récipient selon la revendication 16, caractérisé en ce que les éléments de la paroi avant sont reliés, des deux côtés de la découpe, par l'intermédiaire d'une section (554) du fond du tiroir, qui est sensiblement perpendiculaire à la paroi avant (562).

18. Récipient selon la revendication 14, caractérisé en ce que le tiroir comporte une plaque de fond (512) évidée en forme de cuvette et servant à recevoir un disque ou un disque vidéo (514).

19. Récipient selon la revendication 18, caractérisé en ce que la plaque de fond (512) est évidée en forme de cuvette sur ses deux faces.

20. Récipient selon la revendication 1, dans lequel le dispositif de verrouillage peut être désenclenché manuellement au moyen d'une touche ·(516), caractérisé en ce que le récipient entoure un boîtier (500) pour une multiplicité de tiroirs superposés (502), et en ce que les touches de tiroirs voisins sont décalées les unes par rapport aux autres au niveau de la paroi frontale respective (522).

21. Récipient selon la revendication 1, comportant un boîtier servant à recevoir une multiplicité de tiroirs, caractérisé par des fonds intercalaires, formés par façonnage sur le boîtier et servant à limiter les casiers individuels de réception des tiroirs.

22. Récipient selon la revendication 15, caractérisé en ce que la paroi avant est reliée au tiroir par l'intermédiaire d'une articulation en forme de pellicule.

23. Récipient selon la revendication 15, caractérisé en ce que la paroi avant est précontrainte par un ressort dans sa position écartée par pivotement.

24. Récipient selon les revendications 22 et 23, caractérisé en ce que le ressort de précontrainte pour la paroi avant est un ressort en forme de lame monté au voisinage de l'articulation.

25. Récipient selon la revendication 16, caractérisé en ce que le tiroir (550) est précontraint par un ressort dans sa position basculée.

26. Récipient selon la revendication 1, caractérisé en ce que le dispositif à ressort, qui précontraint le tiroir dans la position d'ouverture, comprend un ressort en forme de lame (510).

27. Récipient selon la revendication 26, caractérisé en ce que le ressort en forme de lame (510) est fixé d'un côté au boîtier, tandis que son extrémité libre est disposée de manière à agir sur le tiroir.

28. Récipient selon la revendication 21, caractérisé en ce que les fonds intercalaires sont évidés en forme de cuvette.

Fig. 1

Fig. 1a

Fig. 2

12

16

2

32

22

10

14

20

18

42

42

40

30

40

24

10

16

22

26

34

18

12

32

28

28

24

14

34

30

26

22

32

12

18

10

40

34

28

30

14

36

38

EP 0 190 234 B1

Fig. 3

Fig. 4.

Fig. 5

4

**_Fig. 6_**

EP 0 190 234 B1

Fig. 7

Fig. 8

6